# EUROPEAN PATENT APPLICATION

(11) **EP 3 770 796 A1**
(43) Date of publication of application: **27.01.2021**
(21) Application number: 19188424.6
(22) Date of filing: 25.07.2019
(51) Int. Cl.: G06K 7/00, G06K 19/07, G01R 31/28

(54) **METHOD FOR HARDWARE INTEGRITY CONTROL OF AN INTEGRATED CIRCUIT CARD**

(71) Applicant: Mastercard International Incorporated, Purchase NY 10577 (US)
(72) Inventor: BLYTHE, Simon, Ely, Cambridgeshire CB7 4AZ (GB)
(74) Representative: Murgitroyd & Company

(57) **Abstract**

When Integrated Circuit Cards (ICC's) such as chip cards are configured and arranged to initiate electronic transactions, such as financial transactions, lapses in security can have severe consequences. Although global standardization means a high degree of interoperability, it also means that ICC's may be manufactured anywhere in the world. A frequent problem is that ICC's with older generation IC's remain in circulation, and/or some manufacturers of ICC's may use older technologies in new cards. Both of these policies may increase the security risks. In addition, ICC's can be cloned, and may be difficult to distinguish from genuine ICC's.

By providing a card reader 200 with a signal generator 400 for providing a circuit test signal 700; and a signal detector 500, for detecting a circuit response signal 750; the response signal 750 may be compared with an expected response signal 850 to determine a degree of electrical correspondence and whether the ICC passes 950 or fails 970 the hardware integrity control.

## Description

### FIELD

The present disclosure relates to a computer-implemented method for hardware integrity control of an integrated circuit card. In particular, for hardware integrity control during an electronic transaction.

### BACKGROUND

ICC's (Integrated circuit cards) or chip cards or smart cards are physical cards, usually made of plastic, which may be used in general for identification, authentication and/or authorization. More specifically, they are often used, for example, as a means to initiate electronic transactions, such as electronic financial transactions, to gain access to restricted area and to data, and to use public transport systems. In some uses, a corresponding PIN (personal identification number) may be required before the card is accepted.

Hardware and software related to ICC's continues to improve, particularly in the area of security. When ICC's are configured and arranged to initiate electronic transactions, lapses in security can have severe consequences - this is particularly important when the electronic transaction is an electronic financial transaction. Although global standardization means a high degree of interoperability, it also means that ICC's may be manufactured anywhere in the world. A frequent problem is that ICC's with older generation IC's remain in circulation, and/or some manufacturers of ICC's may use older technologies in new cards. Both of these policies may increase the security risks. In addition, ICC's can be cloned, and may be difficult to distinguish from genuine ICC's.

It is an object of the invention to improve the security of ICC's while maintaining a high degree of usability.

### GENERAL STATEMENTS

According to a first aspect of the present disclosure, there is provided a computer-implemented method for hardware integrity control, using a card reader, of an integrated circuit card in close physical proximity to the card reader wherein the integrated circuit card comprises one or more test signal receivers, the card reader comprising: a signal generator, configured and arranged to provide a circuit test signal to the one or more test signal receivers of the integrated circuit card; and a signal detector, configured and arranged to detect a circuit response signal from the integrated circuit card; the method comprising: applying the circuit test signal to the integrated circuit card through the one or more signal receivers; detecting the circuit response signal from the integrated circuit card; comparing the circuit response signal with an expected response signal and determining a degree of electrical correspondence; and using the degree of electrical correspondence to determine whether the integrated circuit card passes or fails the hardware integrity control.

By providing a suitable circuit test signal, the integrity of the ICC may be checked (controlled) using a mainly physical measurement that is not influenced by software responses that may be received under normal operating conditions. This non-destructive method may be used to verify a hardware integrity, a hardware version integrity and/or a branding integrity of an ICC. Measurements may be performed using wireless connections and/or electrical contact connections.

According to a further aspect of the present disclosure, the one or more test signal receivers comprise one or more reader electrical contacts, configured and arranged to make electrical contact with one or more of the card contacts after the card reader has received the integrated circuit card; and the signal generator is electrically connected to the one or more reader electrical contacts, configured and arranged to provide the circuit test signal to the integrated circuit card through the one or more reader electrical contacts.

By using one or more electrical contacts, the complexity of the system may be reduced. Additionally or alternatively, it may be possible to use lower energy signals due to a more direct transfer path.

According to another aspect of the present disclosure, the method further comprises: starting an electronic transaction after bringing the integrated circuit card (ICC) into close physical proximity to the card reader; and terminating the electronic transaction if the integrated circuit card fails the hardware integrity control.

The results of the hardware integrity control may be stored, distributed and/or subject to further analysis. Additionally or alternatively, a fail result may be used to terminate a transaction.

Examples of suitable electronic transactions include: a financial transaction; an access request; an exit request; a usage request; a travel request transaction; a purchase request; an authentication; an identification; an authorization; a validation request; a data access request; a data usage request; a data storage request; a communication request; or any combination thereof.

According to a further aspect of the present disclosure, the card reader further comprises one or more wireless response receivers connected to the signal detector, and detecting the circuit response signal is performed at least partially through the one or more wireless response receivers.

Many ICC's are capable of generating wireless (radio) signals. The advantage of one or more wireless receivers is that the receivers may be placed at different dispositions (for example, away from the electrical contacts where an antenna and/or coil is placed, and made very sensitive to pick up even small amplitude wireless signals.

Additionally or alternatively, the card reader further comprises one or more reader electrical contacts connected to the signal detector, and detecting the circuit response signal is at least partially through the one or more reader electrical contacts.

The advantage of using one or more reader electrical contacts for detection is that lower amplitude signals may be detectable, and potentially a broader bandwidth may be detected as antenna's and/or coils are typically optimized for a predetermined frequency range.

According to yet another aspect of the present disclosure, the signal detector and signal generator are connected to the same one or more reader electrical contacts, and applying the circuit test signal and detecting the circuit response signal are at least partially through the same one or more reader electrical contacts.

This may provide a high degree of reproducibility as the variation in circuit response signals may be reduced by using the same reader electrical contacts.

According to still another aspect of the present disclosure, the card reader is configured and arranged to provide an electrical ground to one or more of the reader electrical contacts; and the signal generator is configured and arranged to provide the circuit test signal to the integrated circuit card relative to the electrical ground.

Providing an electrical ground may provide a higher degree of reproducibility in avoiding fully powering up the logic in a partially or fully operating mode.

Additionally or alternatively, the card reader is configured and arranged to provide an electrical ground; and the signal detector is configured and arranged to detect the circuit response signal from the integrated circuit card relative to the electrical ground.

This may provide a higher degree of reproducibility in the hardware integrity control as it may make it easier to compare circuit response signals with expected response signals.

According to a still further aspect of the present disclosure, the card reader is configured and arranged to create one or more images of the integrated circuit card after receiving the integrated circuit card; the method further comprising: comparing the one or more images with an expected image and determining a degree of image correspondence; and using the degree of image correspondence to further determine whether the integrated circuit card passes or fails the hardware integrity control.

Suitable images may be created using visible light, X-ray cameras and/or other non-destructive imaging techniques.

According to a further aspect of the present disclosure, a circuit test signal may comprise off-normal biasing and/or normal-biasing.

By detecting circuit responses that are configured and arranged to not provide enough energy to allow normal logic operation, typical methods of counterfeiting by generating expected software responses become less effective. However, if during injection of the circuit test signal, one or more devices or components do become powered and/or normally powered, the method may still be used - the method does not require a standard communication protocol to be followed as only electrical characteristics are being measured which are mainly determined by the hardware comprised in the ICC.

### BRIEF DESCRIPTION OF THE DRAWINGS

Features and advantages of some embodiments of the present invention, and the manner in which the same are accomplished, will become more readily apparent upon consideration of the following detailed description of the invention taken in conjunction with the accompanying drawings, which illustrate preferred and exemplary embodiments and which are not necessarily drawn to scale, wherein:
FIG. 1A and 1B schematically depict the computer-implemented method for hardware integrity control of an integrated circuit card, and an example of hardware which may be used to perform the method;
FIG. 2A and 2B depict examples of X-ray images used to classify integrated circuit cards;
FIG. 3A depicts the Standard Deviation versus Frequency for fifty-one cards;
FIG. 3B depicts, as an example, the best matches to an integrated circuit card from the circuit response signals; and
FIG. 4 shows reduced-data amplitude versus frequency plots for the X-ray classifications depicted in FIG. 2A.

### DETAILED DESCRIPTION

In the following detailed description, numerous non-limiting specific details are given to assist in understanding this disclosure.

It will be obvious to a person skilled in the art that the method may be implemented on any type of standalone system or client-server compatible system containing any type of client, network, server, and database elements. Storage may be performed using any suitably-configurable computer memory.

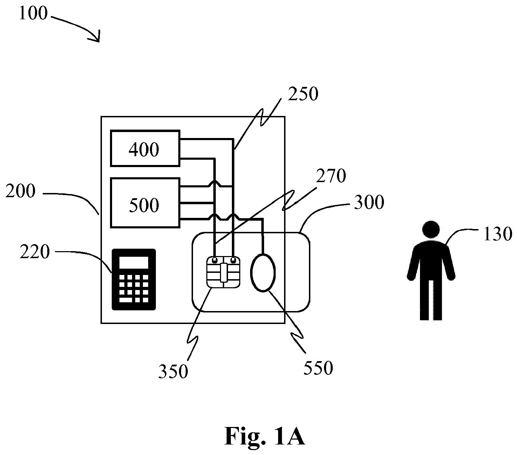

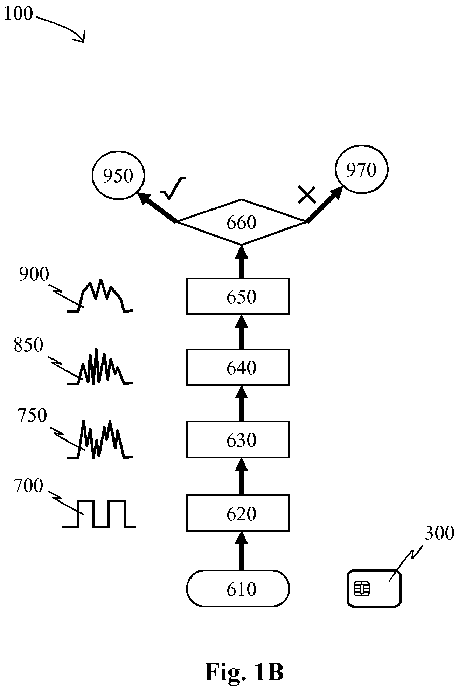

FIG. 1A schematically depicts an example of hardware which may be used to perform the computer-implemented method 100 for hardware integrity control of an integrated circuit card 300. FIG. 1B schematically depicts the computer-implemented method 100.

The integrated circuit card (ICC) 300 (or chip card) comprises one or more integrated circuits (or IC's or chips), and further comprises one or more test signal receivers, such as one or more electrical card contacts 350 - these are configured and arranged to receive signals, and to provide them to one or more of the integrated circuits through one or more electrical interconnections. The ICC 300 may also further comprise one or more additional components, such as an antenna, a coil, a resistor, a capacitor, an inductor, a power source.

The configuration and arrangement of the electrical card contacts 350 may be determined by the form-factor of the ICC 300. In the case of a smartcard, the electrical contacts 350 used to provide signals according to the invention may be standardized contact pads, a dedicated set of contact pads, or some combination thereof. Additionally or alternatively one or more plug and/or socket connections may be used. Additionally or alternatively, one or more wireless receivers, such as one or more antenna's and/or coils, may be used.

ICC's 300 are configured and arranged depending on their function, for example:
- a SIM (Subscriber Identification Module) card for a communication request;
- a payment card, such as a credit card, for financial transactions and/or purchase requests;
- an authentication card for physical and/or data access;
- an identification card for a public transport travel request; and
- an authorization card for a data usage and/or validation request.

Due to their flexibility, one or more functions may be combined in a single ICC 300.

The ICC 300 is typically associated with a Consumer or User 130.

A card reader 200 is provided comprising:
- one or more interfaces, configured and arranged to provide signals to the one or more receivers comprised in the ICC 300 when the ICC 300 is disposed sufficiently proximate to the card reader 200. For example, as depicted, the one or more interfaces may be one or more electrical contacts (connections), configured and arranged to make electrical contact with the one or more electrical card contacts 350 after the card reader 200 has received the ICC 300. Functionally, the one or more card contacts 350 may be considered to be a type of signal receiver - by being in electrical connection with the one or more interfaces, the one or more reader electrical contacts 350 convey signals from the card reader 200 to the integrated circuits and components comprised in the ICC 300;
- a signal generator 400, connected to the one or more interfaces, configured and arranged to provide a circuit test signal 700 to the ICC 300; and
- a signal detector 500, configured and arranged to detect a circuit response signal 750 from the ICC 300.

In the case of the ICC 300 being a smartcard with one or more electrical contacts 350, the one or more interfaces provided in the card reader 200 may be one or more contact pins. Additionally or alternatively, they may be one or more plug and/or socket connections corresponding to one or more sockets and/or plug card connections comprised in the ICC 300. Additionally or alternatively, they may be one or more transmitters corresponding to one or more receivers comprised in the ICC 300.

Optionally, the ICC 300 may comprise one or more wireless signal receivers and be configured to receive the circuit test signal 700 wirelessly, for example using one or more receiving antenna's and/or coils.

Any suitable type of wireless communication protocol may be used such as NFC, Bluetooth, Bluetooth Low Energy, RFID, WLAN, WAN, LPWAN, LoRa, LoRaWAN, NB-IOT, GSM/GPRS, LTE, LTE-M, WiFi, WiFi Direct, Zigbee, Z-Wave, 6LoWPAN, or any combination thereof.

In the case of wireless, the signal generator 400, is preferably configured and arranged to provide the circuit test signal 700 wirelessly, for example using a corresponding transmitting antenna and/or coil. The signal generator 400 is configured and arranged to provide the circuit test signal 700 to the one or more wireless test signal receivers when the ICC 300 is disposed sufficiently proximate to the card reader 200.

For example, ICC's 300 that are configured for contactless operation may comprise components capable of receiving a wireless (or radio) signal. The advantage of one or more wireless signal receivers is that the card reader 200 may be software-upgradeable to read new types of ICC 300 as they become available.

A combination of electrical connections and wireless connections may also be used. The card reader 200 may be further configured and arranged to comprise a plurality of wireless/electrical connections, and to provide a selector for selecting the most suitable signal path for the circuit test signal 700, depending on the type of ICC 300 being checked.

Optionally, the card reader 200 may also comprises a data input device 220, configured and arranged for the Consumer (User) 130 to provide data which may be used during a hardware integrity control or any transaction comprising a hardware integrity control, such as a PIN number, a password.

The computer-implemented method 100 for hardware integrity control of the ICC 300 comprises:
- receiving 610 the ICC 300 into the card reader 200 and/or bringing 610 the ICC 300 into close proximity to the card reader 200. For example, the User 130 may insert the ICC 300 into the card reader 200 or bring the ICC 300 into close physical proximity with a suitable wireless antenna and/or coil comprised in the card reader 200;
- applying (or injecting) 620 the circuit test signal 700 to the ICC 300, for example through one or more card contacts 350 and/or one or more test signal receivers;
- detecting the circuit response signal 750 from the ICC 300;
- comparing the circuit response signal 750 with an expected response signal 850 and determining a degree of electrical correspondence 900; and
- using the degree of electrical correspondence 900 to determine whether ICC 300 passes 950 or fails 970 the hardware integrity control.

The circuit test signal 700 is configured and arranged to profile the physical IC's and components comprised in the ICC 300. The circuit response signal may be considered as a digital fingerprint of the ICC 300 which depends on factors such as:
- the IC's and components directly connected to the one or more card contacts 350 through which the circuit test signal 700 is applied;
- the IC's and components indirectly connected to the one or more cards contacts 350 through which the circuit test signal 700 is applied;
- the types of IC's and components comprised in the ICC 300;
- the manufacturer of the IC's and components, even when the IC's and components are technically considered identical;
- the electrical characteristics of the interconnections between IC's and components, which may include contact pad layouts and bond wires;
- the settings of programmable switches;
- the presence and capacity any memory storage; and
- the presence of data in any memory storage - for example, this may be used to distinguish between ICC's 300 that appear otherwise identical.

Optionally, the method may further comprise starting an electronic transaction after receiving 610 the ICC 300 into the card reader 200 and/or bringing 610 the ICC 300 into close proximity to the card reader 200; and terminating this electronic transaction if the ICC 300 fails 970 the hardware integrity control.

One of the insights on which aspects of the invention are based is that a hardware integrity check may improve security. For example, when an ICC 300 is copied or cloned illegitimately, it is currently sufficient to duplicate the software such that expected responses are generated in response to software authentication requests. After that, the cloned ICC 300 may be indistinguishable to such conventional software requests from the original. In some cases, the actual hardware used in the ICC 300 may be configured to appear different to software interrogation requests - for example, the ICC may comprise an 8GB memory but be configured to report 64GB. Although the software and data may be accurately cloned, there are currently no non-destructive systems or methods that can accurately verify a hardware integrity of ICC's 300.

In addition, IC's are subject to a process of continuous development - new security features are regularly introduced to keep pace with new functional requirements, and following the discoveries of security flaws, device defects and/or potential attacks. Legitimate issuers do not always adopt the latest approved IC's and components, or they may delay adoption for as long as possible. In some cases, the actual hardware used in the ICC may be configured to appear different to software interrogation requests - for example, the ICC may comprise an IC manufactured in 2016, but be configured to report 2019. There are currently no non-destructive systems or methods that can accurately verify a hardware version configuration of ICC's.

Also, a further advantage is that these methods may be used to verify the branding integrity - for example, ICC's from a particular supplier may exclusively use one or more IC's from a particular manufacturer. If the circuit response signal 750 corresponds to a sufficiently high degree 900 with an ICC comprising such an IC, then the branding hardware integrity control may be considered passed 950. If the circuit response signal 750 does correspond to a sufficiently high degree 900 due to an IC of a different manufacturer (or a hardware configuration that the supplier has never legitimately produced, then the branding hardware integrity control may be considered failed 950.

These issues are particularly disadvantageous when an ICC is used to initiate a financial transaction - one or more parties, such as an Issuer, an Acquirer, a merchant, a Consumer (User) and/or an operator of the card scheme may wish to additionally verify the integrity of the ICC hardware - that it is a legitimate ICC, and that it is sufficiently up-to-date.

The methods described herein to check (or control) the integrity of the ICC using a mainly physical measurement that is not influenced by software responses that may be received under normal operating conditions.

If a suitable circuit test signal 700 is applied to the ICC 300, then a corresponding circuit response signal 750 may be detected.

The circuit test signal 700 is a test signal - it is configured and arranged to provide energy that is not configured for normal operation or too low for correct or expected operation. But the circuit produces a response signal 750 that is dependent, to a very high degree, on the hardware configuration of the ICC 300. For example:
- if a test signal is applied without a ground connection, then logic operation may be unpredictable, but correct logic operation is not required, and also not preferred, for operation according to the invention.
- if a test signal is applied which provides less energy than is usually needed to fully power the IC's being checked (controlled), then the signals generated are highly likely to be unintelligible to the standard operating software.

Such signals are, however, suitable to use for hardware integrity control methods.

It may be advantageous to provide one or more circuit test signals 700 to the ICC 300. In case of one or more electrical connections being used, the card reader 200 may be further configured and arranged to select the electrical card contacts 350 depending on the type of ICC 300 being checked. Additionally or alternatively, a series of test configurations may be used, one after the other, until a circuit response signal 750 is detected that is suitable to perform the hardware integrity control.

After applying, transmitting and/or injecting the circuit test signal 700, a corresponding circuit response signal 750 may be detected. In the case of the ICC 300 being a smartcard with one or more electrical contacts 350, the circuit response signal 750 may be detected through one or more contact pins. Additionally or alternatively, the circuit response signal 750 may be detected through one or more plug and/or socket connections corresponding to one or more sockets and/or plug card connections comprised in the ICC 300. Additionally or alternatively, the circuit response signal 750 may be detected wirelessly using one or more response receivers 550, as depicted.

For example, by comprising one or more wireless response receivers 550, such as an antenna and/or a coil, in the card reader 200, connected to the signal detector 500, a corresponding circuit response signal 750 may be detected 630 wirelessly. In particular, if the ICC 300 comprises an antenna and/or a coil, a circuit response signal may be wirelessly generated and transmitted.

For example, ICC's 300 that are configured for contactless operation may comprise components capable of generating a wireless (or radio) signal. The advantage of one or more wireless response receivers 550 is that the receivers may be placed at different dispositions (for example, away from the electrical card contacts 350 where an antenna and/or coil is expected in the ICC 300, and made very sensitive to pick up even small amplitude wireless signals.

Any suitable type of wireless communication protocol may be used such as NFC, Bluetooth, Bluetooth Low Energy, RFID, WLAN, WAN, LPWAN, LoRa, LoRaWAN, NB-IOT, GSM/GPRS, LTE, LTE-M, WiFi, WiFi Direct, Zigbee, Z-Wave, 6LoWPAN, or any combination thereof.

Additionally or alternatively, by comprising one or more reader electrical contacts in the card reader 200 connected to the signal detector 500, a corresponding circuit response signal 750 may be partially or wholly detected 630 through the one or more reader electrical contacts used for detection. The advantage of using one or more reader electrical contacts for detection is that lower amplitude signals may be detectable, and potentially a broader bandwidth may be detected as antenna's and/or coils are typically optimized for a predetermined frequency range.

It may be advantageous to provide one or more wireless response receivers 550 in combination with one or more electrical connections to one or more electrical card contacts 350. The card reader 200 may be further configured and arranged to select the most suitable wireless response receivers 550 and/or reader electrical contacts used for detection, depending on the type of ICC 300 being checked. Additionally or alternatively, a series of detection configurations may be used, one after the other, until a circuit response signal 750 is detected that is suitable to perform the hardware integrity control.

It may advantageous to connect the signal detector 500 and signal generator 400 to the same one or more reader electrical contacts, and applying 620 the circuit test signal 700 and detecting 630 the circuit response signal 750 through the same one or more reader electrical contacts. This may provide a high degree of reproducibility as the variation in circuit response signals may be reduced by using the same reader electrical contacts.

Optionally, the card reader 200 may be configured and arranged to provide an electrical ground to one or more of the reader electrical contacts; and the signal generator 400 may be configured and arranged to provide the circuit test signal 700 to the integrated circuit card 300 relative to the electrical ground.

Many ICC's 300 are configured and arranged to receive electrical energy relative to an electrical ground - typically, one or more of the card contacts 350 is configured and arranged to act as an electrical ground, and the minimum voltage to correctly operate may be defined with respect to this ground. For example, as defined in ISO 7816-3, a class A smart card requires a minimum of 4.5V (nominally 5V), a class B smart card requires a minimum of 2.7V (nominally 3V), and a class C smart card requires a minimum of 1.62V (nominally 1.8V). So, providing an electrical ground may provide a higher degree of reproducibility in avoiding fully powering up the logic in a partially or fully operating mode.

Additionally or alternatively, the card reader 200 may be configured and arranged to provide an electrical ground, and signal detector 500 may be configured and arranged to detect the circuit response signal 750 from the integrated circuit card 300 relative to the electrical ground. This may provide a higher degree of reproducibility in the hardware integrity control as it may make it easier to compare 640 circuit response signals 750 with expected response signals 850.

Any number of different circuit test signals 700 may be used to produce corresponding circuit response signals 750. It will often be advantageous to repeat comparisons 640 with the same circuit test signal 700 and/or similar circuit test signals 700 and/or different circuit test signals 700.

Circuit test signals 700 may comprise normal biasing and/or off-normal biasing. Off-normal biasing is described in more detail in US Patent US 10 145 894 (Paiboon Tangyungyong et al) for failure analysis and defect identification. Off-normal biasing occurs when a circuit test signal 700 is used (a biasing scheme) that does not require the ICC 300 to be functional or in a known functional state during the biasing. One of the insights upon which the invention is based is that off-normal biasing and similar stimulation, either directly or using a wireless signal, may be used to identify components, such as Integrated Circuits (IC's).

For example, supplying periodic pulses between a power and a ground card contact 350, while the other card contacts 350 are floating (not connected) and/or biased (possibly through a load resistor) at constant voltages. Examples of periodic pulses that may be suitable for this purpose include square waves, sinusoidal waveforms, and periodic envelope waveforms in which each envelope contains a frequency-chirped square-wave or sinusoidal waveform. Another example of off-normal biasing is to supply periodic pulses between a power card contact 350 and a ground card contact 350 while certain specifically selected card contacts 350 are electrically connected to the power card contacts 350, and other card contacts 350 are floating and/or biased at constant voltages.

Normal biasing, by contrast, occurs when a circuit test signal 700 is used (a biasing scheme) that requires the ICC 300 to be in a known functional state; this is the type of test signal used in normal electrical testing, such as is performed using a conventional circuit tester. Normal biasing is often performed using input in the form of a complex logical test sequence that is meant to place the ICC 300 in known functional states. A circuit test signal 700 comprising only off-normal biasing is different - in particular, it does not comprise logical information.

By detecting one or more circuit responses 750 that are configured and arranged to not provide enough energy to allow normal logic operation, typical methods of counterfeiting by generating expected software responses become less effective. However, if during injection of the circuit test signal 700, one or more devices or components do become powered and/or normally powered, the method 100 may still be used - the method 100 does not require a standard communication protocol to be followed as only electrical characteristics are being measured which are mainly determined by the hardware comprised in the ICC 300. So a combination of normal and off-normal biasing signals may be comprised in a circuit test signal 700.

A library of expected responses 850 may be made available to the card reader 200 and/or stored for use in the card reader 200. Expected responses 850 may be generated using simulation and/or measurements on a sufficient number of ICC's 300.

For example, to generate a sufficiently accurate expected response for a particular ICC 300, the following method may be used:
- provide a reference card reader, configured and arranged to be sufficiently similar to the card reader 300 to be used for the hardware integrity control. Although the same labelling is used below for easier comparison, the reference card reader may provide more extensive facilities than are to be expected in a card reader 200 - these facilities allow a higher degree of signal injection and signal detection / analysis. Additional precautions may also be taken, such as shielding the reference card reader to avoid external influences.
- provide one or more signal generators 400 to generate a plurality of circuit test signals 700;
- provide one or more signal detectors 500 to detect any circuit response signals 750 and to provide additional analysis;
- conduct initial experiments to determine the most suitable voltages and frequency settings for the pulse generator 400, as well as the frequency range for the detector / analyzer 500;
- once the most suitable circuit test signal 700 has been determined;
- optionally, determine the background response of the reference card reader by injecting the most suitable circuit test signal 700 when no ICC 300 is present in the reference card reader. This background response may be subsequently subtracted from each circuit response signal 750. This may also be periodically used in a card reader 200, which may improve the reproducibility of the measurement;
- apply the most suitable circuit test signal 700 a multiplicity of times to a large number of ICC's 300; and
- performing analysis to determine the expected response signal 850 for subsequent use with the card reader 200.

In a non-limiting example, the following measurements were performed on a plurality of ICC's 300 for use during financial transactions to determine an expected response signal 850. Although the same labelling is used below for easier comparison, the measurement and analysis rig used provided more extensive facilities than are to be expected in a card reader 200 - these facilities allow a higher degree of signal injection and signal detection / analysis.
- a pulse generator 400 was configured to provide 600mV pulses at 100 kHz to the power card contact 350 relative to the ground card contact 350. So two electrical connections were made to each ICC 300. In this example, the ICC's 300 being evaluated were class A. However, the skilled person will realize that other ICC 300 classes, such as class B and/or class C, may be evaluated using pulses at a level that correspond to off-normal biasing for those classes;
- a spectrum detector / analyzer 500 acquired circuit response signals 750 (spectra) over the range from 10 MHz to 510MHz; and
- an average of ten thousand circuit response signals 750 were saved for each ICC 300;

Measurements were made on a batch of fifty-one cards, composed of thirty-three ICC's 300 (bank cards) issued between 2001 and 2016 by UK banks, as well as some laboratory test cards:

| **Issuer** | **Year** | **Brand** | **Level** | **Type** |
|---|---|---|---|---|
| AMEX | 2001 | AMEX | Blue | Credit |
| Barclaycard | 2001 | VISA | Classic | Credit |
| Barclaycard | 2002 | VISA | Gold | Credit |
| Barclays | 2004 | VISA | Platinum | Debit |
| AMEX | 2004 | AMEX | Blue | Credit |
| Barclaycard | 2004 | MasterCard | Classic | Credit |
| Barclays | 2004 | VISA | Classic | Debit |
| AMEX | 2004 | AMEX | Blue | Credit |
| Barclays | 2004 | VISA | Platinum | Debit |
| Barclaycard | 2005 | VISA | Gold | Credit |
| Barclays | 2005 | VISA | Classic | Debit |
| Barclays | 2006 | VISA | Classic | Debit |
| Halifax | 2006 | VISA | Platinum | Credit |
| Barclaycard | 2006 | VISA | Classic | Credit |
| Barclays | 2007 | VISA | Classic | Debit |
| Barclays | 2007 | VISA | Platinum | Debit |
| Barclays | 2007 | VISA | Platinum | Debit |
| AMEX | 2007 | AMEX | Blue | Credit |
| Halifax | 2008 | VISA | Platinum | Credit |
| Barclaycard | 2009 | VISA | Gold | Credit |
| Barclays | 2009 | VISA | Classic | Debit |
| Barclaycard | 2009 | VISA | Gold | Credit |
| Barclays | 2009 | VISA | Classic | Debit |
| Barclays | 2010 | VISA | Platinum | Debit |
| Barclaycard | 2011 | VISA | Gold | Credit |
| Citi | 2012 | MasterCard | Platinum | Credit |
| Barclays | 2013 | VISA | Classic | Debit |
| Halifax | 2014 | MasterCard | Platinum | Credit |
| Barclaycard | 2014 | VISA | Platinum | Credit |
| Citi | 2014 | MasterCard | Platinum | Credit |
| Barclaycard | 2015 | VISA | Gold | Credit |
| Barclays | 2016 | VISA | Platinum | Debit |
| Barclays | 2016 | VISA | Classic | Debit |

To preserve the functionality of the cards for further or future investigations, the ICC's 300 were not subject to chemical de-processing (or de-capping). They were X-rayed and a classification scheme was devised based on these X-ray images.

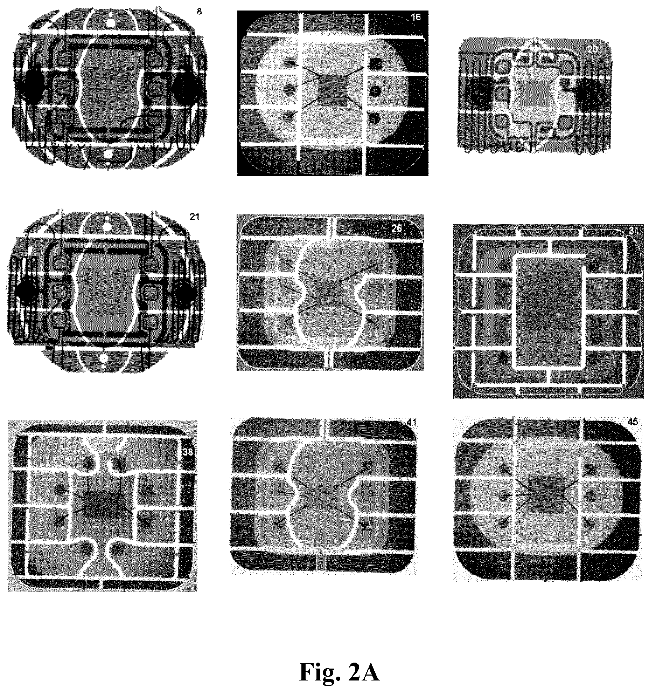

FIG. 2A depicts examples of X-ray images used to classify the ICC's 300 - examples from each of the nine final X-ray classifications (see below) are depicted in a 3x3 array of images, with the following ICC indices:

| | | | |
|---|---|---|---|
| Top row, left-to-right: | 8 | 16 | 20 |
| Middle row, left-to-right: | 21 | 26 | 31 |
| Bottom row, left-to right: | 38 | 41 | 45 |

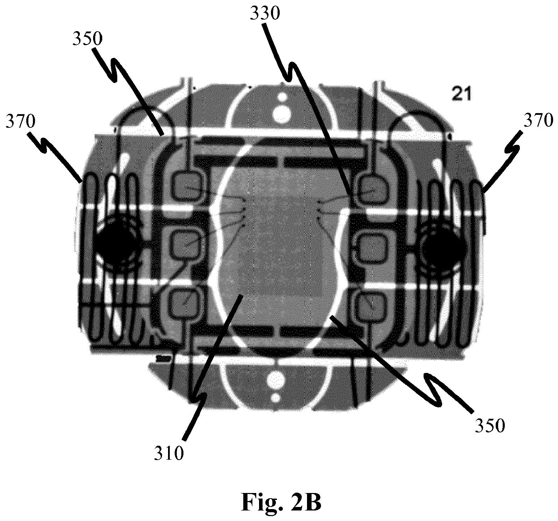

FIG. 2B depicts an enlarged view of one of the classification examples (ICC index nr. 21). Some image processing was performed to enhance the contrast. It depicts:
- a central rectangular die 310, visible as mid-grey rectangle;
- a contact pad layout of the electrical card contacts 350 - they comprise conducting material, such as at least one metal. They will then tend to appear darker in X-ray images than the background, although they may be relatively thin. They are depicted here as dark grey regions, with white regions separating them. The separations are gaps in the contact pad, so that each contact pad is insulated from its neighbors;
- one or more bonding wires 330, visible as approximately straight dark lines between the die 310 and the electrical card contacts 350. In this example, seven bonding wires 330 are visible. They comprise conducting material, such as at least one metal - they will then tend to appear darker in X-ray images than the background. In this example, they are darker than the electrical card contacts 350; and
- one or more antenna's and/or coils 370. In this case, two NFC antenna's are visible as meandering dark lines underneath the electrical card contacts 350 on each side of the die 310. They comprise conducting material, such as at least one metal - they will then tend to appear darker in X-ray images than the background. In this example, they are darker than the electrical card contacts 350, and approximately the same darkness as the bonding wires 330.

Similarity of ICC's 200 assigned to each classification was based on criteria detectable using the X-ray image in FIG. 2B, such as:
- the contact pad layout of the electrical card contacts 350, one or more dimensions of the die 310 and/or its shape, the disposition and length of one or more bonding wires 330; and/or
- the presence or absence of an antenna and/or coil 370; and/or
- the number of antenna's and/or coils 370; and/or
- the length and/or number of meanders of an antenna and/or coil 370.

The criteria used were based upon the likelihood that the criteria would affect the response of the circuit hardware to the selected test signal 700.

During these exemplary measurements, the classification was performed manually - however, this may be automated, taking into account one or more of the features indicated above. Any suitable form of imaging may be used, including laser light-based. A plurality of techniques may also be used. The X-ray measurements were performed to give an indication of the hardware (IC's and/or components) comprised in each ICC 300.

Each ICC 300 was assigned an arbitrary numerical index, which was used to group them according to the X-ray classification:

| **X-ray classification** | **ICC indices (300)** |
|---|---|
| 1 | 4, 6, 18, 20, 27, 48, 52 |
| 2 | 2, 38 |
| 3 | 8, 12 |
| 4 | 19, 31, 32, 33, 34, 35 |
| 5 | 21, 22 |
| 6 | 7, 23, 26, 28, 50 |
| 7 | 9, 10, 45 |
| 8 | 13, 16, 24, 30 |
| 9 | 14, 29, 41 |

So, the examples depicted in FIG. 2A are examples from each of the nine final X-ray classifications, depicted in a 3x3 array of images, with the following X-ray classifications:

| | | | |
|---|---|---|---|
| Top row, left-to-right: | 3 | 8 | 1 |
| Middle row, left-to-right: | 5 | 6 | 4 |
| Bottom row, left-to right: | 2 | 9 | 7 |

In order to further classify the test response signals 750 (the spectra), the standard deviation of more than five hundred thousand signals 750 (ten-thousand for each of the fifty-one ICC's) was calculated.

As the reference test signal 750 is to be as distinctive as possible, peaks in the standard deviation were noted as frequency regions where there was a significant variation between the results from different cards.

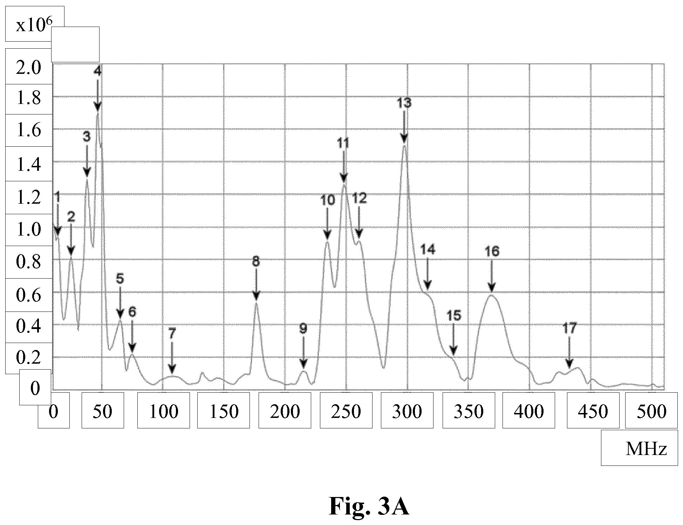

FIG. 3A depicts the Standard Deviation versus Frequency for fifty-one cards. Standard deviation is depicted along the Y axis (from the bottom to the top) from 0 to 2 x 10⁶, with each horizontal line representing a step of 0.2 x 10⁶. Frequency is depicted along the X axis (from left to right) from 0 to 500 MHz, with each vertical line representing a step of 50 MHz. In addition, the peaks (1 to 17 from left to right) have been identified and marked with an identification number for use in the rest of the classification procedure. The peaks are approximately at:

| Peak nr | Frequency (MHz) | Standard deviation |
|---|---|---|
| 1 | 10 | 0.95 x 10⁶ |
| 2 | 20 | 0.8 x 10⁶ |
| 3 | 40 | 1.3 x 10⁶ |
| 4 | 45 | 1.9 x 10⁶ |
| 5 | 65 | 0.4 x 10⁶ |
| 6 | 75 | 0.2 x 10⁶ |
| 7 | 110 | 0.075 x 10⁶ |
| 8 | 175 | 0.55 x 10⁶ |
| 9 | 215 | 0.1 x 10⁶ |
| 10 | 235 | 0.9 x 10⁶ |
| 11 | 250 | 1.25 x 10⁶ |
| 12 | 260 | 0.9 x 10⁶ |
| 13 | 300 | 1.5 x 10⁶ |
| 14 | 320 | 0.6 x 10⁶ |
| 15 | 350 | 0.2 x 10⁶ |
| 16 | 370 | 0.6 x 10⁶ |
| 17 | 435 | 0.1 x 10⁶ |

Entire circuit response spectra 750 were matched against each other by calculating the mean absolute differences between pairs of values across all frequency samples. For each spectrum associated with an ICC 300, the difference values were plotted versus all other cards and the lowest troughs used to identify the best matches with each ICC 300.

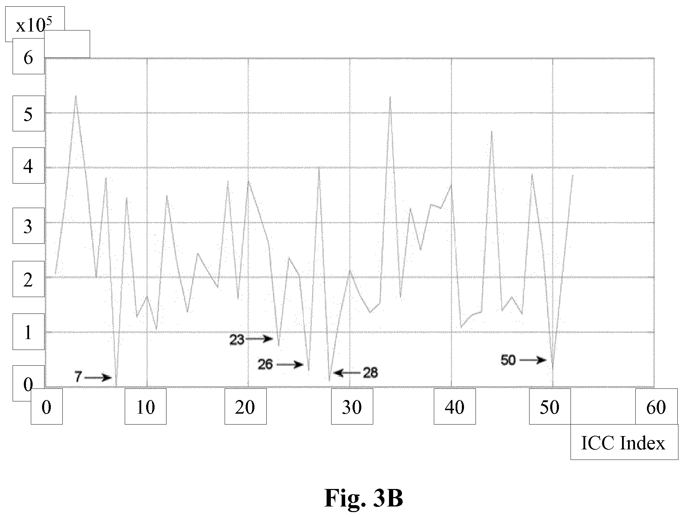

FIG. 3B depicts, as an example, the best matches to ICC index nr 7 from the circuit response signals 750 (spectra). The mean absolute difference is depicted along the Y axis (from the bottom to the top) from 0 to 6 x 10⁵, with each horizontal line representing a step of 1 x 10⁵. The ICC index numbers are depicted along the X axis (from left to right) from 0 to 51, with each vertical line representing a step of 10 ICC's. In addition, the ICC indexes associated with the deepest troughs (7, 23, 26, 28 and 50 from left to right) have been identified and marked with the ICC index number.

The deepest troughs are depicted at approximately:

| ICC index | Mean absolute difference |
|---|---|
| 7 | 0 x 10⁵ |
| 23 | 0.75 x 10⁵ |
| 26 | 0.2 x 10⁵ |
| 28 | 0.05 x 10⁵ |
| 50 | 0.4 x 10⁵ |

The circuit response signals 750 and the spectral analysis depicted was used to group the ICC's according to the electrical measurements into 11 electrical classifications:

| **Electrical classification** | **ICC Indices (300)** |
|---|---|
| A | 2, 38 |
| B | 3, 34 |
| C | 4, 6, 18, 20, 27, 48, 52 |
| D | 5, 13, 16, 24, 30 |
| E | 7, 26, 28, 50 |
| F | 8, 12 |
| G | 10, 47 |
| H | 11, 14, 29, 32, 41, 42, 43, 45 |
| K | 17, 19, 31, 33, 35 |
| L | 21, 39 |
| M | 25, 46 |

For each ICC 300 spectrum, the best matches to every other ICC 300 was considered, and a threshold determined for inclusion into a particular group. Spectra in each group were compared to those in other groups to look for close similarities and the number of groups were adjusted accordingly. Each group was then associated with a classification letter.

To check the accuracy of the analysis, the results of the X-ray classifications and Electrical classifications were compared.

| Pairing | X-ray ICC Indices | Electrical ICC Indices |
|---|---|---|
| 2 and A | 2, 38 | 2, 38 |
| 1 and C | 4, 6, 18, 20, 27, 48, 52 | 4, 6, 18, 20, 27, 48, 52 |
| 8 and D | 13, 16, 24, 30 | **5,** 13, 16, 24, 30 |
| 6 and E | 7, **23**, 26, 28, 50 | 7, 26, 28, 50 |
| 3 and F | 8, 12 | 8, 12 |
| 9 and H | 14, 29, 41 | **11,** 14, 29, **32,** 41, **42, 43, 45** |
| 4 and K | 19, 31, **32**, 33, **34,** 35 | **17,** 19, 31, 33, 35 |

Even with relatively few classifications, there is a relatively high degree of correspondence between the hardware and electrical characteristics. Even with this relatively coarse method, there is only a small discrepancy about the following ICC index numbers:
- 5 was assigned electrically into classification D, but did not match sufficiently any of the X-ray classifications 1 to 9.
- 23 was assigned into X-ray classification 6, but did not match sufficiently any of the electrical classifications A to M.
- 11, 42, 43, 45 were assigned electrically into classification H, but did not match sufficiently any of the X-ray classifications 1 to 9.
- 32 was assigned into X-ray classification 4 and assigned into electrical classification H. These classifications were not paired.
- 17 was assigned electrically into classification K, but did not match sufficiently any of the X-ray classifications 1 to 9.
- 34 was assigned into X-ray classification 4 and assigned into electrical classification B. These classifications were not paired.

The skilled person will realize that this method may be improved by further refining the electrical and X-ray classification techniques. In addition, by taking into account characteristics that were not immediately evident in the X-ray images, such as IC types and the size of any memory storage, further improvement is expected.

When performing the hardware integrity control method 100, it may be advantageous for the card reader 200 to be configured and arranged to create one or more images of the integrated circuit card 300 after receiving the integrated circuit card 300. B comparing the one or more images with an expected image and determining a degree of image correspondence, this may also be used to determine whether the ICC 300 passes or fails the hardware integrity control. Even a simple camera may capture characteristics of the ICC 300, such as the form of the card electrical contacts 350, which as depicted in FIG. 2A, vary considerably. It may also read any logo's or names to check the branding. Other types of imaging, such as X-ray may also be used.

The one or more images may be used directly to trigger that the hardware integrity control has failed 970 - for example if the electrical contact 350 pattern does not match the one or more logos. The images may also be used in a more indirect way to select a circuit test signal 700 (or a group of signals 700) to be used, as well as selecting one or more expected signal responses 850.

Variation in the expected circuit response 850 may be reduced when the ICC 300 and/or card reader 200 comply with an applicable standard for the type of transaction being performed. For example, for financial transactions, applicable standards include: an ISO 7810 standard, an ISO 7816 standard, an EMV standard or protocol, and any combination thereof.

It may also be advantageous to create a specific test signal 700 and specific expected response 750 for each ICC 300 when the ICC is issued.

A disadvantage of comparing full-size frequency spectra is the amount of data to be stored. An insight upon which an aspect of the invention is based is that most of the points plotted in FIG. 3A may be discarded - typically five hundred points are used for such a graph. However, it is only the 17 peaks that need to be stored and subsequently used in creating the expected response signals 850:

| Regions around peaks | From / MHz | To / MHz |
|---|---|---|
| 1 | 11 | 17 |
| 2 | 20 | 30 |
| 3 | 35 | 41 |
| 4 | 44 | 52 |
| 5 | 60 | 70 |
| 6 | 70 | 80 |
| 7 | 95 | 120 |
| 8 | 172 | 182 |
| 9 | 210 | 220 |
| 10 | 230 | 240 |
| 11 | 244 | 254 |
| 12 | 257 | 267 |
| 13 | 290 | 305 |
| 14 | 310 | 330 |
| 15 | 335 | 345 |
| 16 | 355 | 385 |
| 17 | 415 | 445 |

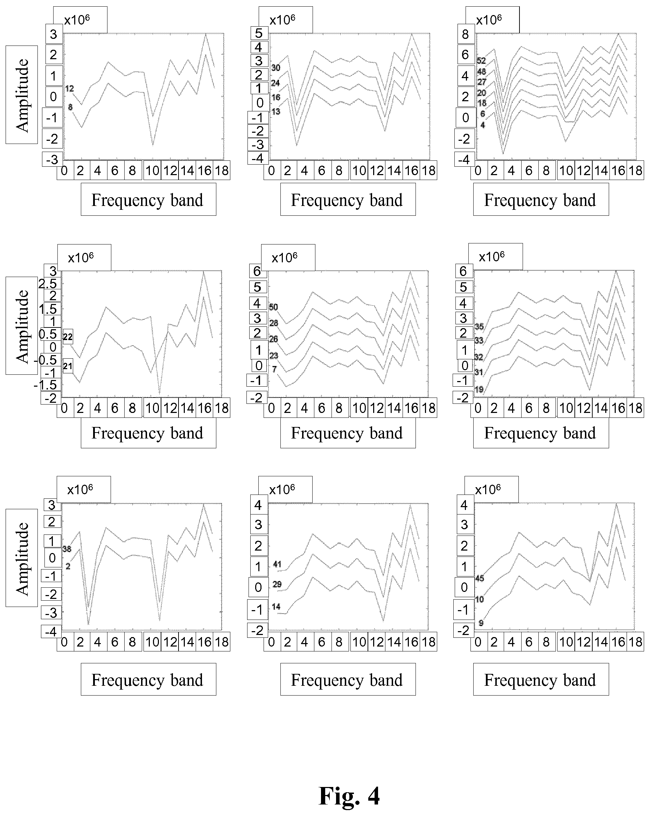

FIG. 4 shows reduced-data amplitude versus frequency plots for the X-ray classifications depicted in FIG. 2A. For each ICC 300 that was assigned to one of the X-ray classifications of FIG. 2A, the spectra have been overlaid to illustrate that a high degree of similarity is still discernable, even when the data is greatly reduced from 500 points to 34 points.

FIG. 4 depicts nine groups of ICC characteristics in a 3x3 arrangement, each group associated with X-ray classifications depicted in FIG. 2A:

| | | | |
|---|---|---|---|
| Top row, left-to-right: | 3 | 8 | 1 |
| Middle row, left-to-right: | 5 | 6 | 4 |
| Bottom row, left-to right: | 2 | 9 | 7 |

For each group of characteristics, amplitude is depicted along the Y axis (from the bottom to the top) - the scaling of the Y-axis has been adapted to give a maximum zoom while still displaying all the members of the group. Group members are offset vertically so that the similarities in the frequency plots become more discernable. The frequency bands (or regions around the peaks) are depicted along the X axis (from left to right) from 0 to 18, with each vertical mark on the axis representing a step of 2.

Top-left depicts the reduced-data amplitude versus frequency plots for X-ray classification 3. Amplitude is indicated along the Y axis (from bottom to top) from -3 x 10⁶ to +3 x 10⁶, with each horizontal tick on the axis representing a step of 1 x 10⁶. From bottom to top, the plots are shown for ICC's 8 and 12, with almost identical frequency plots.

Top-center depicts the reduced-data amplitude versus frequency plots for X-ray classification 8. Amplitude is indicated along the Y axis (from bottom to top) from -4 x 10⁶ to +5 x 10⁶, with each horizontal tick on the axis representing a step of 1 x 10⁶. From bottom to top, the plots are shown for ICC's 13, 16, 24 and 30, with almost identical frequency plots.

Top-right depicts the reduced-data amplitude versus frequency plots for X-ray classification 1. Amplitude is indicated along the Y axis (from bottom to top) from -4 x 10⁶ to +8 x 10⁶, with each horizontal tick on the axis representing a step of 2 x 10⁶. From bottom to top, the plots are shown for ICC's 4, 6, 18, 20, 27, 48 and 52, with almost identical frequency plots. A small deviation is observed for ICC 6 in frequency bands 10 to 12.

Middle-left depicts the reduced-data amplitude versus frequency plots for X-ray classification 5. Amplitude is indicated along the Y axis (from bottom to top) from -2 x 10⁶ to +3 x 10⁶, with each horizontal tick on the axis representing a step of 0.5 x 10⁶. From bottom to top, the plots are shown for ICC's 21 and 22, with almost identical frequency plots. A large deviation is observed for ICC 22 in frequency bands 10 to 13.

Middle-center depicts the reduced-data amplitude versus frequency plots for X-ray classification 6. Amplitude is indicated along the Y axis (from bottom to top) from -2 x 10⁶ to +6 x 10⁶, with each horizontal tick on the axis representing a step of 1 x 10⁶. From bottom to top, the plots are shown for ICC's 7, 23, 26, 28 and 50, with almost identical frequency plots.

Middle-right depicts the reduced-data amplitude versus frequency plots for X-ray classification 4. Amplitude is indicated along the Y axis (from bottom to top) from -2 x 10⁶ to +6 x 10⁶, with each horizontal tick on the axis representing a step of 1 x 10⁶. From bottom to top, the plots are shown for ICC's 19, 31, 32, 33 and 35, with almost identical frequency plots.

Bottom-left depicts the reduced-data amplitude versus frequency plots for X-ray classification 2. Amplitude is indicated along the Y axis (from bottom to top) from -4 x 10⁶ to +3 x 10⁶, with each horizontal tick on the axis representing a step of 1 x 10⁶. From bottom to top, the plots are shown for ICC's 2 and 38, with almost identical frequency plots.

Bottom-center depicts the reduced-data amplitude versus frequency plots for X-ray classification 9. Amplitude is indicated along the Y axis (from bottom to top) from -2 x 10⁶ to +4 x 10⁶, with each horizontal tick on the axis representing a step of 1 x 10⁶. From bottom to top, the plots are shown for ICC's 14, 29 and 41, with almost identical frequency plots.

Bottom-right depicts the reduced-data amplitude versus frequency plots for X-ray classification 7. Amplitude is indicated along the Y axis (from bottom to top) from -2 x 10⁶ to +4 x 10⁶, with each horizontal tick on the axis representing a step of 1 x 10⁶. From bottom to top, the plots are shown for ICC's 9, 10 and 45, with almost identical frequency plots. A small deviation is observed for ICC 45 in frequency bands 12 to 13.

A plurality of test circuit signals 700 may be made available to the card reader 200 to check the integrity of each type of ICC 300. These may be stored in a local library, or made available through a high-speed network. This may further reduce the predictability of the test and further reduce the risk that a counterfeit ICC 300 may be constructed to generate a specific circuit response signal 750 as a sort of "replay" attack.

The signal generator 400 may be programmable, allowing the circuit test signal 700 to be communicated as a parameters, such as amplitude, frequency and shape. Encryption may also be used to further increase the security of the card reader 200.

The card reader 200 may further be configured and arranged to transmit a circuit response signal 750 to a remote server for partial or full comparison with an expected response signal 850.

Although the present invention has been described in connection with specific exemplary embodiments, it should be understood that various changes, substitutions, and alterations apparent to those skilled in the art can be made to the disclosed embodiments without departing from the spirit and scope of the invention as set forth in the appended claims.

### REFERENCE NUMBERS USED IN THE DRAWINGS

100 Improved authentication method
130 User (Consumer)
200 Card reader
220 Data input device
250 Ground connection
270 Power connection
300 Integrated circuit card (ICC) or chip card
310 Die
330 Die bonding wire
350 Test signal receivers, for example an electrical card contact
370 Antenna and/or coil
400 Signal generator
500 Signal detector
550 Wireless response receiver
610 Bringing the integrated circuit card into close proximity with the card reader
620 Applying the circuit test signal
630 Detecting the circuit response signal
640 Comparing the circuit response signal with an expected response signal
650 Determining a degree of electrical correspondence
660 Determine whether the integrated circuit card passes or fails
700 Circuit test signal
750 Circuit response signal
850 Expected response signal
900 Degree of electrical correspondence
950 Pass the hardware integrity control
970 Fail the hardware integrity control

## Claims

1. A computer-implemented method (100) for hardware integrity control using a card reader (200), of an integrated circuit card (300) in close physical proximity (610) to the card reader (200) wherein the integrated circuit card (300) comprises one or more test signal receivers (350), the card reader (200) comprising:
- a signal generator (400), configured and arranged to provide a circuit test signal (700) to the one or more test signal receivers (350) of the integrated circuit card (300); and
- a signal detector (500), configured and arranged to detect a circuit response signal (750) from the integrated circuit card (300);
the method comprising:
- applying (620) the circuit test signal (700) to the integrated circuit card (300) through the one or more signal receivers (350);
- detecting (630) the circuit response signal (750) from the integrated circuit card (300);
- comparing (640) the circuit response signal (750) with an expected response signal (850) and determining (650) a degree of electrical correspondence (900); and
- using the degree of electrical correspondence (900) to determine (660) whether the integrated circuit card (300) passes (950) or fails (970) the hardware integrity control.

2. The computer-implemented method according to claim 1, wherein:
- the one or more test signal receivers (350) comprise one or more reader electrical contacts, configured and arranged to make electrical contact with one or more of the card contacts (350) after the card reader (200) has received the integrated circuit card (300); and
- the signal generator (400) is electrically connected to the one or more reader electrical contacts, configured and arranged to provide the circuit test signal (700) to the integrated circuit card (300) through the one or more reader electrical contacts.

3. The computer-implemented method according to claim 1 or claim 2, the method further comprising:
- starting an electronic transaction after bringing (610) the integrated circuit card (300) into close physical proximity to the card reader (200); and
- terminating the electronic transaction if the integrated circuit card (300) fails (970) the hardware integrity control.

4. The computer-implemented method according to claim 3, wherein the electronic transaction is selected from the group comprising:
- a financial transaction; an access request; an exit request; a usage request; a travel request transaction; a purchase request; an authentication; an identification; an authorization; a validation request; a data access request; a data usage request; a data storage request; a communication request; or any combination thereof.

5. The computer-implemented method according to any preceding claim, wherein the card reader (200) further comprises one or more wireless response receivers (550) connected to the signal detector (500), and detecting (630) the circuit response signal (750) is performed at least partially through the one or more wireless response receivers (550).

6. The computer-implemented method according to any preceding claim, where the card reader (200) and ICC (300) are configured and arranged to send and/or receive one or more signals wirelessly according to a communication protocol selected from the group consisting of:
NFC, Bluetooth, Bluetooth Low Energy, RFID, WLAN, WAN, LPWAN, LoRa, LoRaWAN, NB-IOT, GSM/GPRS, LTE, LTE-M, WiFi, WiFi Direct, Zigbee, Z-Wave, 6LoWPAN, or any combination thereof.

7. The computer-implemented method according to any preceding claim, wherein the card reader (200) further comprises one or more reader electrical contacts connected to the signal detector (500), and detecting (630) the circuit response signal (750) is at least partially through the one or more reader electrical contacts.

8. The computer-implemented method according to claim 7, wherein the signal detector (500) and signal generator (400) are connected to the same one or more reader electrical contacts, and applying (620) the circuit test signal (700) and detecting (630) the circuit response signal (750) are at least partially through the same one or more reader electrical contacts.

9. The computer-implemented method according to any preceding claim, wherein:
- the card reader (200) is configured and arranged to provide an electrical ground to one or more of the reader electrical contacts; and
- the signal generator (400) is configured and arranged to provide the circuit test signal (700) to the integrated circuit card (300) relative to the electrical ground.

10. The computer-implemented method according to any preceding claim, wherein:
- the card reader (200) is configured and arranged to provide an electrical ground; and
- the signal detector (500) is configured and arranged to detect the circuit response signal (750) from the integrated circuit card (300) relative to the electrical ground.

11. The computer-implemented method according to any preceding claim, wherein the circuit test signal (700) comprises off-normal biasing.

12. The computer-implemented method according to any preceding claim, wherein:
- the card reader (200) is configured and arranged to create one or more images of the integrated circuit card (300) after receiving the integrated circuit card (300);
the method further comprising:
- comparing the one or more images with an expected image and determining a degree of image correspondence; and
- using the degree of image correspondence to further determine whether the integrated circuit card (300) passes (950) or fails (970) the hardware integrity control.

13. The computer-implemented method according to any of the preceding claims, wherein the integrated circuit card (300) and/or card reader (200) comply with:
- an ISO 7810 standard, an ISO 7816 standard, an EMV standard or protocol, and any combination thereof.
